# EUROPÄISCHE PATENTSCHRIFT

(11) **EP 0 485 734 B1**
(45) Veröffentlichungstag und Bekanntmachung des Hinweises auf die Patenterteilung: **08.02.1995**
(21) Anmeldenummer: 91117041.3
(22) Anmeldetag: 07.10.1991
(51) Int. Cl.: B60K 13/04, F16L 55/033, F01N 7/18

(54) **Aufhängeöse für eine Abgasanlage eines Kraftfahrzeugs**
Muffler hanger for a motor vehicle
Anneau support pour tuyau d'échappement d'un véhicule

(30) Priorität: 12.11.1990 DE 4036002
(43) Veröffentlichungstag der Anmeldung: 20.05.1992
(73) Patentinhaber: WEGU Gummi- und Kunststoffwerke Walter Dräbing KG, D-34123 Kassel (DE)
(72) Erfinder: Dräbing, Walter, W-3501 Niestetal (DE); Griech, Hermann, W-3513 Staufenberg-Landwehrhagen (DE)
(74) Vertreter: Rehberg, Elmar, Dipl.-Ing.

(56) Entgegenhaltungen:
- EP-A- 0 320 088
- DE-A- 1 505 498
- DE-A- 3 104 709
- DE-A- 3 737 987
- DE-B- 2 658 358

## Beschreibung

Die Erfindung bezieht sich auf eine zwei Aufhängepunkte aufweisende, elastisch verformbare Aufhängeöse für eine Abgasanlage eines Kraftfahrzeugs, mit einem Schlaufenkörper aus Elastomerwerkstoff, in dem eine in sich geschlossene, federnd-nachgiebige Einlage in Form eines mehrlagigen Schlingenkörpers aus elastisch-dehnfähigem Material eingebettet ist. Solche Aufhängeösen werden meist zu mehreren zwischen dem Boden eines Kraftfahrzeugs und einer Auspuffanlage eingesetzt. Sie dienen dazu, die beiden miteinander verbundenen Körper gegen Körperschall zu isolieren und die Auspuffanlage begrenzt federnd nachgiebig aufzuhängen.

Eine Aufhängeöse der eingangs beschriebenen Art ist aus der DE-PS 37 37 987 bekannt. Die Einlage besteht aus elastisch-dehnfähigem Material, also nicht mehr aus zugfestem Material. Sie ist nicht nur im Sinn ihrer Änderung ihrer Lage im Schlaufenkörper, also etwa wie eine ringförmig angeordnete Kette, dehnbar, sondern das elastisch-dehnfähige Material ergänzt und vergrößert damit den Federweg. Einer solchen Einlage kommt eine eigenständige Funktion im Hinblick auf den zweiten Bereich der Kennlinie zu. Die Einlage bleibt im Bereich kleiner Auslenkungen frei von nennenswerten Biegekräften, so daß in diesem ersten Bereich allein die Eigenschaften des Schlaufenkörpers aus Elastomerwerkstoff zur Anwendung kommen, wodurch die Kennlinie in diesem Bereich weitgehend bzw. angenähert linear verläuft. Die Federung ist in diesem Anfangsbereich besonders weich und somit schall- und schwingungsisolierend. Die kraftmäßige Wirkung der Einlage setzt praktisch erst im Übergangsbereich zwischen kleinen und großen Ausfederungen ein, d. h. die Einlage schafft einerseits einen kraftmäßigen Freiraum für kleine Ausfederbewegungen, in welchem sie nicht bzw. praktisch nicht zur Wirkung kommt. Dafür setzt aber ihre kraftmäßige Wirkung am Übergangspunkt zu großen Ausfederungen abrupt ein, so daß die Federkennlinie in diesem Bereich gleichsam einen Übergangsknick bekommt, von dem aus sie nicht nur progressiv verläuft, sondern bei dem bereits zu Beginn größerer Auslenkungen eine sehr große Progressivität und Progressivitätszunahme erreicht wird. Zwar wird so der Übergangspunkt nicht durch einen mechanisch wirkenden Anschlag begrenzt, jedoch ist der Knick in der Federkennlinie nicht immer erwünscht. Erst am Ende des zweiten, geknickt verlaufenden Bereichs ist der Federweg beendet, obwohl auf einen festen Anschlag verzichtet wird, was infolge der starken Progressivität möglich ist.

Eine weitere Aufhängeöse ist aus der DE-AS 26 58 358 bekannt. Diese weist einen rhombusähnlichen Schlaufenkörper aus gummiartigem Material auf, der in seinem mittleren Bereich von Stegen durchsetzt ist. Diese Stege wirken bei Einfederbewegungen im Sinne einer Begrenzung bzw. eines Anschlags. Der äußere Bereich des Schlaufenkörpers besitzt etwa ringförmige Gestaltung. Etwa in der Mitte des Querschnitts des ringförmigen Schlaufenkörpers ist eine in sich geschlossene, in der Ebene des Schlaufenkörpers federndnachgiebige und zugfeste Einlage eingebettet, die aus einem Stahldraht oder einem Federstahlband bestehen kann. Diese Einlage besitzt somit ebenfalls rhombusähnliche Ausgangsform. Bei Beanspruchung verformt sich der Schlaufenkörper von Anfang an zusammen mit der Einlage, wobei der zulässige Federweg durch eine gestreckte Lage der zugfesten Einlage im Sinne eines Anschlags begrenzt wird. Damit wird eine progressive Kennlinie des Schlaufenkörpers bei Auslenkung über den gesamten Auslenkbereich angestrebt. Sowohl der Schlaufenkörper aus Elastomerwerkstoff wie auch die Einlage übernehmen über den gesamten zulässigen Bewegungsbereich bei entsprechender Auslenkung der Abgasanlage und damit auch schon im Bereich kleiner Auslenkungen Kräfte und wirken daher von Anfang an zusammen. Damit ist es zwar möglich, eine gewisse Progressivität zu erreichen. Nachteilig ist jedoch, daß die Verbindung zwischen zugfester Einlage und Schlaufenkörper bereits bei kleinen Auslenkungen beansprucht wird, so daß die Lebensdauer der Aufhängeöse negativ beeinflußt ist.

Der Erfindung liegt die Aufgabe zugrunde, eine Aufhängeöse der eingangs beschriebenen Art zu schaffen, bei der die Kennlinie dahingehend verbessert ist, daß einerseits der ausnutzbare Federweg vergrößert wird, ohne daß eine bauliche Vergrößerung stattfindet und andererseits der Übergangsknick der Kennlinie zwischen kleinen und größeren Auslenkungen vermieden bzw. abgeflacht wird. Bei Kräften von etwa 100 N auf die Aufhängeöse soll der nutzbare Federweg etwa 18 bis 20 mm betragen.

Erfindungsgemäß wird dies dadurch erreicht, daß der Schlaufenkörper aus einem Cord gewickelt ist, daß der Schlaufenkörper einen inneren, sich um die Aufhängepunkte herum erstreckenden Ringkörper und einen äußeren, auf vergleichsweise größerem Radius um die Aufhängepunkte herum angeordneten Ringkörper aufweist, daß die beiden Ringkörper auf einem Teil des Umfangs beabstandet und unter Einschluß eines Freiraums angeordnet sind, und daß der Schlingenkörper im äußeren Ringkörper angeordnet ist.

Wichtig ist, daß die federnd-nachgiebige Einlage in Form eines mehrlagigen Schlingenkörpers nicht nur aus elastischdehnfähigem Material besteht, sondern darüberhinaus noch aus einem Cord gewickelt ist. Damit wird nicht nur das Material der Anlage im Sinne von Federbewegungen nachgiebig gemacht, sondern es wird auch die besondere Konstruktion, nämlich in Form eines Cords, zusätzlich ausgenutzt, wobei sich eine Vergrößerung des betreffenden Federwegs ergibt. Unter einem Cord wird ein Endloselement verstanden, welches aus mehreren Fäden zusammengedreht ist, wobei jeder Faden wiederum aus einem Monofilament oder aus Multifilamenten bestehen kann. Dadurch, daß der Schlaufenkörper damit eine gegenüber dem Stand der Technik noch einmal erhöhte Dehnfähigkeit aufweist, ist er der Bewegung des Elastomerwerkstoffs des Schlaufenkörpers noch besser angepaßt. Auch durch die Verbesserung der Haftung zwischen den beiden Teilen und die gemeinsame Bewegung bei Federungen wird die Lebensdauer erhöht. Durch die Aufteilung des Schlaufenkörpers in einen inneren und einen äußeren Ringkörper und die Anordnung des Schlingenkörpers im äußeren Ringkörper wird in Verbindung mit der Anordnung von Freiräumen erreicht, daß sich der Schlingenkörper bei kleinen Federbewegungen im äußeren Ringkörper und mit diesem zwar bewegen kann, wobei dabei die Freiräume aufgebraucht werden; nennenswerte Kräfte müssen dabei jedoch nicht überwunden werden. Erst beim Übergang zwischen kleineren und größeren Federbewegungen nimmt der Schlingenkörper auf. Diese Kraftaufnahme erfolgt allmählich, so daß zwar eine gewisse Progressivität der Kennlinie entsteht, jedoch ein Übergangsknick vermieden wird. Da der Schlingenkörper durch die besondere Ausbildung als Cord einen vergrößerten Federweg aufweist, ergibt sich weiterhin vorteilhaft ein insgesamt vergrößerter Federweg für die Aufhängeöse ohne konstruktive Vergrößerung. Die beiden Aufhängepunkte weisen einen im Vergleich zum Stand der Technik unveränderten Abstand zueinander auf und auch die äußeren Abmessungen der Aufhängeöse liegen in vergleichbarer Größenordnung. Die Ausbildung des Schlingenkörpers aus einem Cord hat auch den weiteren Vorteil, daß eine große Oberfläche der Einlage entsteht, die infolge des Dralls schrägstehend zur Beanspruchungsrichtung ausgebildet ist, wodurch die übertragbaren Kräfte zwischen Schlingenkörper und Schlaufenkörper erhöht werden.

Es genügt bereits, wenn der Cord aus zwei Einzelfäden zusammengedreht ist. Selbstverständlich kann ein Cord auch beispielsweise aus drei oder noch mehr Fäden zusammengedreht sein. Auch eine Konstruktion, bei der zunächst zwei Fäden zusammengedreht sind und dann in einem zweiten Schritt zwei solcher zusammengedrehter Elemente wiederum miteinander verdreht oder verdrillt werden, ist möglich. Es ist auch möglich, daß der Cord einen weitgehend gestreckten Mittelfaden aufweist, um den herum ein oder mehrere Fäden herumgeschlungen bzw. herumgewickelt sind. Auch können hier für die einzelnen Fäden unterschiedliche Materialien eingesetzt werden, beispielsweise ein Mittelfaden aus einem Elastomerwerkstoff und die darumgewickelten oder -geschlagenen Fäden aus einem textilen Material. Wichtig ist in allen Fällen, daß durch die räumliche Anordnung der einzelnen Fädern im Cord ein zusätzlicher Anteil des Federwegs des ohnehin elastisch-dehnfähigen Materials des Schlingenkörpers genutzt wird. So kann der Mittelfaden aus einem Elastomerwerkstoff besteht und die darumgeschlungenen Fäden als Festigkeitsträger fungieren.

Die beiden Ringkörper können in dem an die Aufhängepunkte sich radial nach außen anschließenden Bereich miteinander verbunden sein, während die Freiräume etwa um 90° dazu versetzt angeordnet sind. Diese Ausbildung ist insofern förderlich, als der Schlaufenkörper damit im Bereich der Aufhängepunkte verstärkt wird und die Freiräume andererseits beanspruchungsgerecht genutzt werden.

Es ist auch möglich, die beiden Ringkörper im miteinander verbundenen Bereich verstärkt auszubilden. Dies kann z. B. durch einen vergrößerten Querschnitt geschehen, der größer als die Summe der Einzelquerschnitte der beiden Ringkörper ist. Andererseits kann auch eine Verbreiterung der Ringkörper im Bereich, welcher an die Aufhängepunkt anschließt, vorgenommen werden. Durch solche Verstärkungsmaßnahmen im Bereich der Aufhängepunkte wird der Nachteil beseitigt, daß hier durch die Krafteinwirkung an den Aufhängepunkten normalerweise ein erhöhter Abrieb auftritt, der die Lebensdauer begrenzt. Durch die Verstärkung wird dieser Schwachstelle entgegengewirkt.

Die Freiräume können sichelförmige Gestalt aufweisen, wobei einer der Ringkörper etwa kreisförmig und der andere Ringkörper etwa elliptischen Umriß aufweist. Bei Federbewegungen größeren Ausmaßes legen sich dann die beiden RIngkörper unter Aufbrauch der Freiräume aneinander und in diesem Bereich beginnt auch die Einlage in Form des Schlingenkörpers, sich an der Kraftaufnahme zu beteiligen.

Im Mittelbereich des inneren Ringkörpers können zwischen den Aufhängepunkten Pufferkörper angeordnet sein, die bei Einfederbewegungen als Anschlag dienen. Bei solchen Einfederbewegungen, bei denen sich die Auspuffanlage dem Bodenblech des Kraftfahrzeugs annähert und auch der Schlaufenkörper weitgehend kraftlos wird, muß die Bewegung beendet werden. Die Pufferkörper, die zweckmäßig auch aus dem Material des Schlaufenkörpers bestehen, haben hier eine Dämpfungswirkung und verhindern zugleich ein Aufeinanderschlagen der Aufhängehaken am Bodenblech und an der Auspuffanlage. Es ist auch möglich, die Pufferkörper bei einem Spritzvorgang des Schlaufenkörpers aus härterem Material auszuformen, welches im Mittelbereich zugespritzt wird.

Die Pufferkörper können eine größere Breite als die Ringkörper aufweisen. Diese Gestaltung ist sinnvoll, um auch bei thermischen Bewegungen der Auspuffanlage relativ zum Bodenblech sicherzustellen, daß die Pufferkörper auch dann noch ihre Anschlagwirkung erreichen können und nicht aneinander vorbeigeführt werden. Solche Aufhängeösen werden bekanntlich in vielen Fällen mit ihrer Haupterstreckungsebene senkrecht zu der Bewegungsrichtung der Auspuffanlage bei thermischen Dehnungen aufgehängt.

Zwischen den Pufferkörpern kann ein Spalt mit sich beidendig vergrößernden Ausnehmungen vorgesehen sein. Damit wird dieser Spalt mit den Ausnehmungen etwa die Form eines Hundeknochens annehmen können, was dazu führt, daß vorteilhaft der innere Ringkörper besonders weich und nachgiebig gestaltet ist, so daß der innere Ringkörper bereits ein Großteil des Federwegs aufnehmen kann und insoweit der Gesamtfederweg der Aufhängeöse vergrößert wird.

Die Erfindung wird anhand bevorzugter Ausführungsbeispiele weiter erläutert und beschrieben. Es zeigen:
- Figur 1: eine Ansicht auf die Aufhängeöse in einer ersten Ausführungsform,
- Figur 2: einen Schnitt gemäß der Linie II-II in Figur 1,
- Figur 3: einen Schnitt gemäß der Linie III-III in Figur 1,
- Figur 4: eine Ansicht auf die Aufhängeöse gemäß Figur 1,
- Figur 5: einen Abschnitt aus einem Cord in einer ersten Ausführungsform,
- Figur 6: einen Abschnitt aus einem Cord in einer zweiten Ausführungsform,
- Figur 7: eine Ansicht auf die Aufhängeöse in einer zweiten Ausführungsform,
- Figur 8: eine Stirnansicht der Aufhängeöse gemäß Figur 7,
- Figur 9: einen Schnitt gemäß der Linie IX-IX in Figur 7,
- Figur 10: einen Schnitt gemäß der Linie X-X in Figur 7 und
- Figur 11: ein Kraft/Weg-Diagramm der Aufhängeöse gemäß den Figuren 1 bis 4.

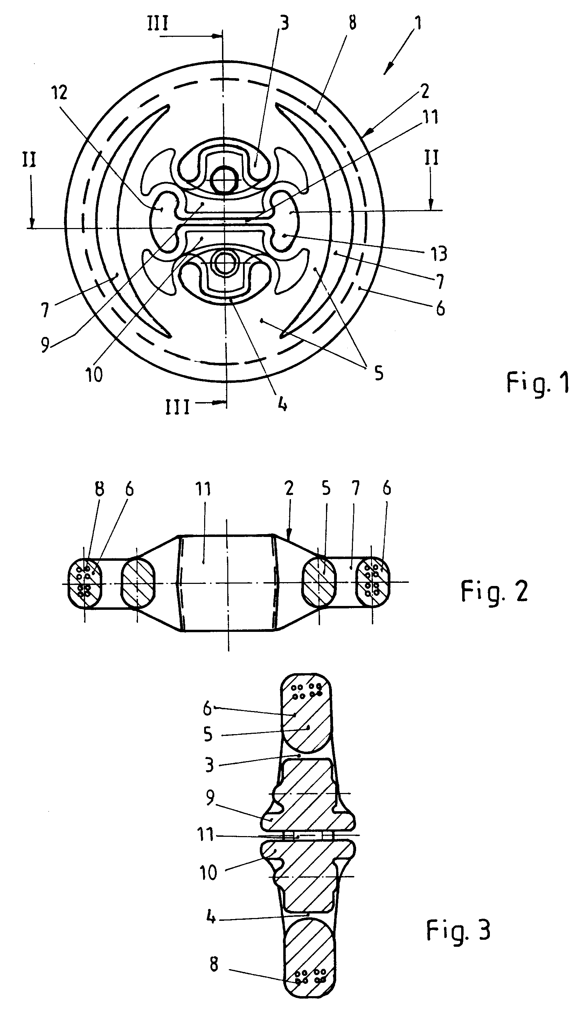

Die in den Figuren 1 bis 4 dargestellte Aufhängeöse 1 weist einen Schlaufenkörper 2 aus Elastomerwerkstoff auf, der sich um zwei hier in Form von Durchbrechungen angeordnete Aufhängepunkte 3 und 4 herum erstreckt. Durch die besondere Formgebung der die Aufhängepunkte 3 und 4 bildenden Durchbrechungen ist zugleich zum Ausdruck gebracht, daß die nicht dargestellten Aufhängehaken derart gebogen ausgebildet sind. Der eine dieser Haken, der beispielsweise im Aufhängepunkt 3 angreift, ist üblicherweise mit dem Bodenblech des Kraftfahrzeugs verbunden, während der andere Aufhängehaken, der im Bereich des Aufhängepunkts 4 eingreift, an der Auspuffanlage angebracht ist.

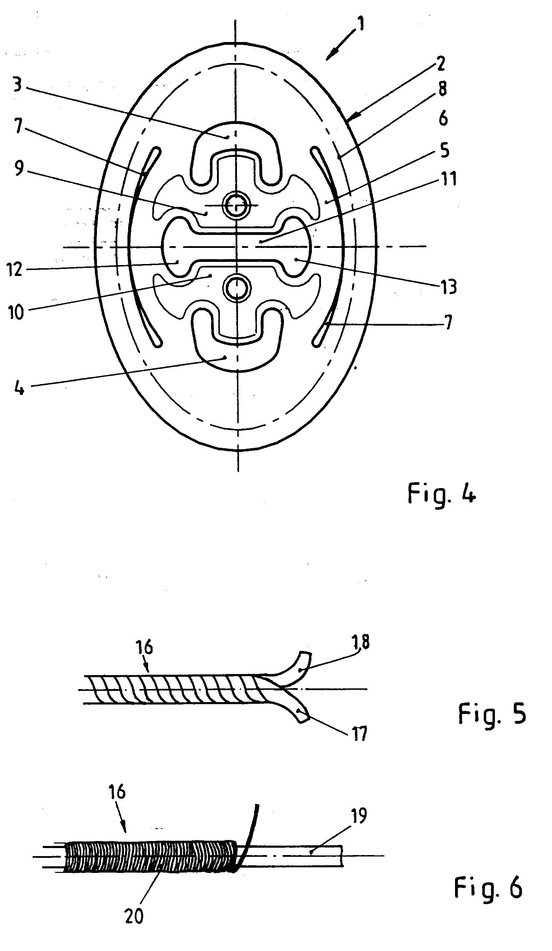

Der Schlaufenkörper 2 aus Elastomerwerkstoff weist einen inneren Ringkörper 5 und einen äußeren Ringkörper 6 auf, wobei in unbelastetem Zustand gemäß Figur 1 der innere Ringkörper 5 etwa elliptische Gestalt und der äußere Ringkörper 6 etwa kreisringförmige Gestalt aufweisen. Wie ersichtlich, erstrecken sich beide Ringkörper 5 und 6 um die Aufhängepunkte 3 und 4 herum in geschlossener Formgebung. Im radialen Bereich von den Aufhängepunkten 3 und 4 nach außen sind die beiden Ringkörper 5 und 6 miteinander verbunden bzw. gehen ineinander über. In einem um etwa 90° gedrehten Bereich sind zwischen den Ringkörpern 5 und 6 mondförmige Freiräume 7 angeordnet, die symmetrisch zur Schnittangabe II-II vorgesehen sind. Wie insbesondere ein Vergleich mit der Darstellung der Figur 4 zeigt, verformen sich die beiden Ringkörper 5 und 6 bei Ausfederbewegungen unter Aufbrauch der Freiräume 7, d. h. der äußere Ringkörper 6 legt sich an den inneren Ringkörper 5 an. Wichtig ist es, zu erkennen, daß sich nicht nur der äußere Ringkörper 6, sondern auch der innere Ringkörper 5, beim Übergang zwischen den Figuren 1 und 4 verformt hat. Die wesentliche Kraftaufnahme erfolgt dabei im inneren Ringkörper 5, während der äußere Ringkörper 6 erst allmählich in die Kraftaufnahme einbezogen wird.

Lediglich im äußeren Ringkörper 6 ist ein als federndnachgiebige Einlage fungierender, mehrlagiger Schlaufenkörper 8 angeordnet, der aus einem Endloselement mehrlagig gewickelt ist, wie dies am besten aus Figur 3 erkennbar ist. Das Endloselement ist dabei zunächst mit einer gummihaltigen Lösung getränkt und angetrocknet sowie zu einem mehrlagigen Schlingenpaket gewickelt. Das Endloselement besteht aus einem Cord, wie es beispielsweise in den Figuren 5 und 6 in vergrößernder Darstellung verdeutlicht ist. Die Aufhängeöse wird in der Weise hergestellt, daß zunächst Rohgummiplatten bzw. -formkörper erzeugt werden. Andererseits wird der Schlaufenkörper 8 in Form des Schlingenpakets gewickelt und gestaltverfestigt. Nach dem Einführen der Teile in ein Formwerkzeug erfolgt die Vulkanisation.

Im inneren Bereich des inneren Ringkörpers 5 sind zwei Pufferkörper 9 und 10 gebildet, die durch einen Spalt 11 voneinander getrennt sind, der sich nach beiden Seiten hin zu Ausnehmungen 12 und 13 erweitert. Durch diese Gestaltung wird auch der innere Ringkörper 5 konstruktiv besonders weich und nachgiebig gemacht.

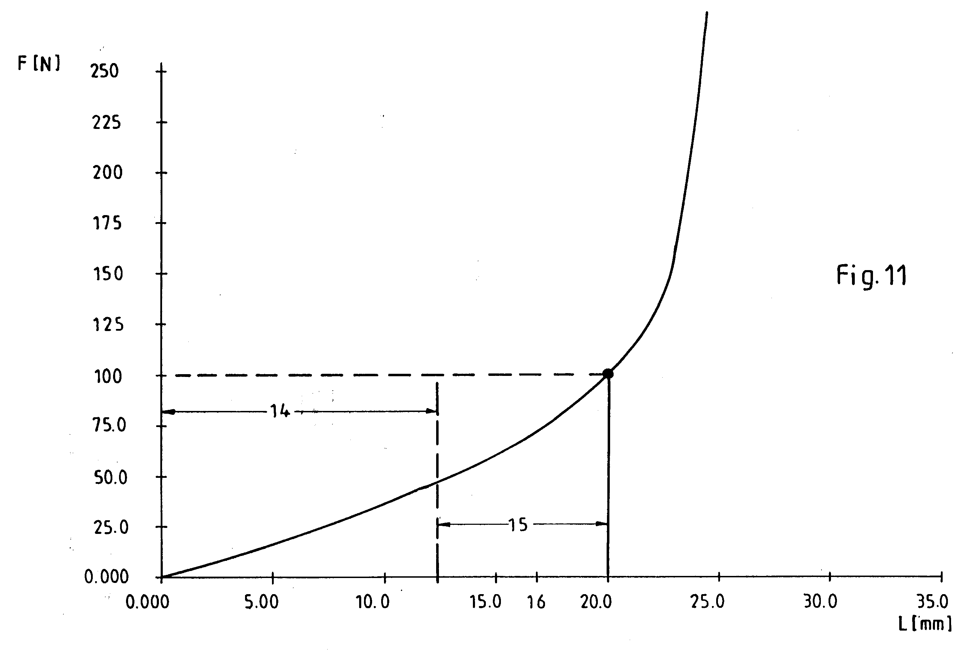

Figur 11 zeigt das zugehörige Kraft/Weg-Diagramm der Aufhängeöse 1 gemäß den Figuren 1 bis 4. Die Kraft F in Newton ist über der Länge L in mm aufgetragen. Man erkennt, daß die Federkennlinie sehr weich verläuft. Sie kann ohne Weiteres bis Federbewegungen in die Größenordnung von 20 mm benutzt werden. Dieser Bereich, der bereits die kleinen und großen Ausfederbewegungen umfaßt, wird unterteilt in einen ersten Bereich 14 kleiner Ausfederbewegungen und einen sich anschließenden Bereich 15, der bei größeren Ausfederbewegungen benutzt wird. Figur 4 zeigt etwa den Zustand, der an der Übergangsstelle zwischen den Bereichen 14 und 15 vorliegt. Im Bereich 14 nimmt im wesentlichen lediglich der innere Ringkörper 5 Kräfte auf, während der äußere Ringkörper 6 zwar seine Gestalt von einer kreisförmigen in eine elliptische Form ändert, jedoch noch keine nennenswerten Kräfte aufnimmt. Erst im anschließenden Bereich 15 wird der äußere Ringkörper 6 mit seinem Schlaufenkörper zur Kraftaufnahme zunehmend herangezogen, wobei es lediglich aufgrund der hohen Dehnfähigkeit des Schlaufenkörpers 8 möglich ist, überhaupt Federwege in der Größenordnung von 20 mm zu erreichen. Die Kennlinie verläuft in den Bereichen 14 und 15 ohne nennenswerte Abknickung progressiv zunehmend. Eine größere Zunahme bis zur Erschöpfung der Nachgiebigkeit des Schlaufenkörpers 8 schließt sich an den Bereich 15 an, wobei ein harter Anschlag vermieden wird.

Aus den Figuren 2 und 3 ist erkennbar, daß der Schlaufenkörper 2 im Mittelbereich, der von dem inneren Ringkörper 5 eingeschlossen wird, eine größere Breite aufweist als im Bereich des äußeren Ringkörpers 6. Damit werden die Pufferkörper 9 und 10 besonders verstärkt. Auch bei thermischen Wegänderungen, bei denen sich der obere Teil der Ringkörper 5, 6 (Figur 3) in axialer Richtung gegenüber dem unteren Teil der Ringkörper 5 und 6 verschiebt, besteht immer noch eine Überdeckung der Pufferkörper 9 und 10, so daß diese ihre Anschlagfunktion auch in solchen Situation erfüllen können.

In den Figuren 5 und 6 sind Endloselemente in Form eines Cords 16 dargestellt, wie sie zu einem mehrlagigen Schlingenpaket gewickelt als Schlaufenkörper 8 zum Einsatz gelangen. Gemäß Figur 5 sind zwei Fäden 17 und 18 miteinander verdreht, wobei jeder Faden 17, 18 entweder aus einem Monofilament oder auch aus einem Multifilament bestehen kann. Die einzelnen Schlingen des Schlingenkörpers 8 werden durch eine gummihaltige Lösung zusammengehalten. Auch die Verdrillung der beiden Fäden 17 und 18 kann durch eine solche Maßnahme gestaltverfestigt sein.

Figur 6 zeigt eine andere Ausführungsform des Cords 16 mit einem Mittelfaden 19 aus elastomerem Werkstoff, der von einem Faden 20, der als Festigkeitsträger wirkt, umwickelt ist. Als Faden 20 kann textiles Material eingesetzt werden. Es ist auch möglich, mehr als einen Faden 20 um den Mittelfaden 19 herumzuwickeln, auch in gegenläufiger Windung. Weitere Ausbildungen des Cords 16 sind ohne Weiteres denkbar, auch die Verwendung von mehr als zwei Fäden 17, 18.

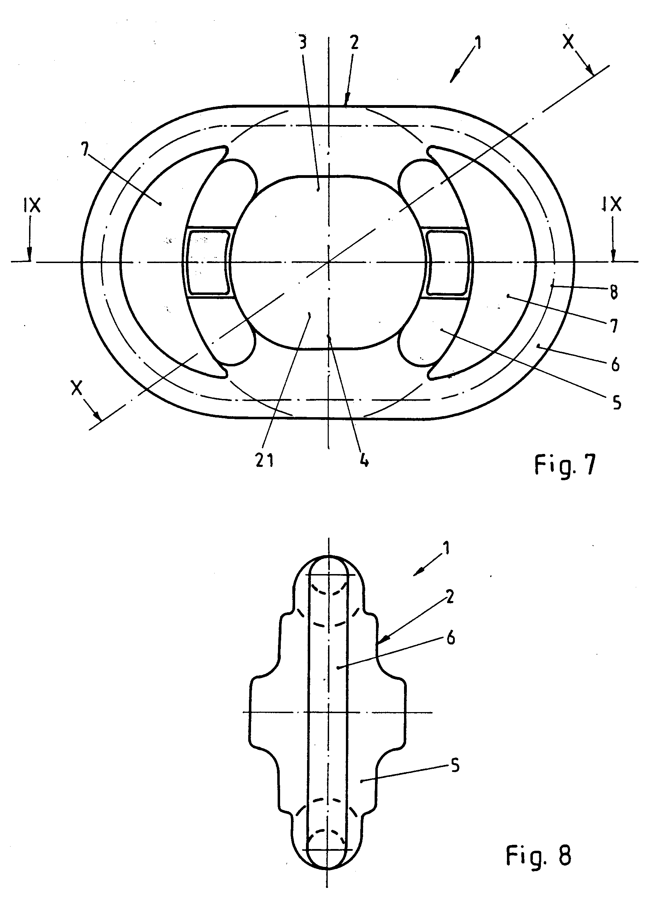

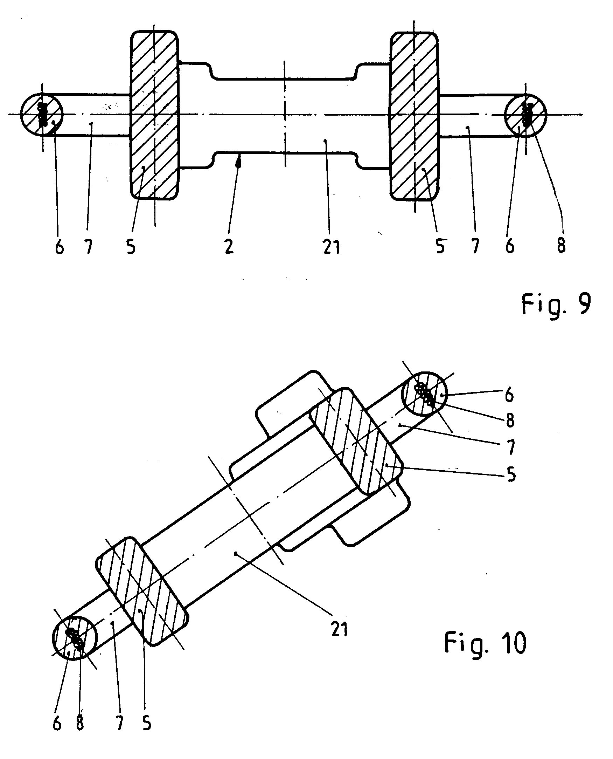

In den Figuren 7 bis 10 ist eine zweite Ausführungsform der Aufhängeöse 1 dargestellt. Auch hier ist der Schlaufenkörper 2 aus dem inneren Ringkörper 5 und dem äußeren Ringkörper 6 gebildet, wobei auch hier der Schlaufenkörper 8 als Einlage nur in dem äußeren Ringkörper 6 angeordnet ist. In unbelastetem Zustand, wie dies Figur 7 zeigt, besitzt der innere Ringkörper 5 Kreisringform, während der äußere Ringkörper 6 nach Art einer Ellipse gestaltet ist. Im Mittelbereich des inneren Ringkörpers 5 ist hier eine große Durchbrechung 21 vorgesehen. Wie insbesondere Figur 8 erkennen läßt, ist der innere Ringkörper 5 im Anschluß an den Mittelbereich der Freiräume 7 verbreitert und verstärkt. Im Anschluß an die Aufhängepunkte 3 und 4 radial nach außen gehen die beiden Ringkörper 5 und 6 ineinander über. Wie die Figuren 9 und 10 erkennen lassen, besitzt der innere Ringkörper 5 einen größeren Querschnitt als der äußere Ringkörper 6. Man erkennt, daß bei Belastung bzw. bei Ausfederbewegungen sich der innere Ringkörper 6 in Richtung auf eine elliptische Gestalt verformt, während umgekehrt der äußere Ringkörper 6 zunächst etwa Kreisform durchläuft und sich dann wiederum in eine elliptische Gestalt begibt. Das Kraft/Weg-Diagramm auch dieser Aufhängeöse ist ähnlich, wie dies anhand von Figur 11 bereits für das Ausführungsbeispiel der Figuren 1 bis 4 beschrieben wurde.

### Bezugszeichenliste:

- 1: = Aufhängeöse
- 2: = Schlaufenkörper
- 3: = Aufhängepunkt
- 4: = Aufhängepunkt
- 5: = innerer Ringkörper
- 6: = äußerer Ringkörper
- 7: = Freiraum
- 8: = Schlaufenkörper
- 9: = Pufferkörper
- 10: = Pufferkörper
- 11: = Spalt
- 12: = Ausnehmung
- 13: = Ausnehmung
- 14: = Bereich
- 15: = Bereich
- 16: = Cord
- 17: = Faden
- 18: = Faden
- 19: = Mittelfaden
- 20: = Faden
- 21: = Durchbrechung

## Patentansprüche

1. Zwei Aufhängepunkte (3, 4) aufweisende, elastisch verformbare Aufhängeöse (1) für eine Abgasanlage eines Kraftfahrzeugs, mit einem Schlaufenkörper (2) aus Elastomerwerkstoff, in dem eine in sich geschlossene, federnd-nachgiebige Einlage in Form eines mehrlagigen Schlingenkörpers (8) aus elastisch-dehnfähigem Material eingebettet ist, dadurch gekennzeichnet, daß der Schlingenkörper (8) aus einem Cord (16) gewickelt ist, daß der Schlaufenkörper (2) einen inneren, sich um die Aufhängepunkte (3, 4) erstreckenden Ringkörper (5) und einen äußeren, auf vergleichsweise größerem Radius um die Aufhängepunkte (3, 4) herum angeordneten Ringkörper (6) aufweist, daß die beiden Ringekörper (5, 6) auf einem Teil des Umfangs beabstandet und unter Einschluß eines Freiraums (7) angeordnet sind, und daß der Schlingenkörper (8) im äußeren Ringkörper (69) angeordnet ist.

2. Aufhängeöse nach Anspruch 1, dadurch gekennzeichnet, daß der Cord (16) aus zwei Einzelfäden (17, 18) zusammengedreht ist.

3. Aufhängeöse nach Anspruch 1, dadurch gekennzeichnet, daß der Cord (16) einen weitgehend gestreckten Mittelfaden (19) aufweist, um den herum ein oder mehrere Fäden (20) herumgeschlungen bzw. -gewickelt sind.

4. Aufhängeöse nach Anspruch 3, dadurch gekennzeichnet, daß der Mittelfaden (19) aus einem Elastomerwerkstoff besteht, und daß die herumgeschlungenen Fäden (20) als Festigkeitsträger fungieren.

5. Aufhängeöse nach Anspruch 1, dadurch gekennzeichnet, daß die beiden Ringkörper (5, 6) in dem an die Aufhängepunkte (3, 4) sich radial nach außen anschließenden Bereich miteinander verbunden sind, während die Freiräume (7) etwa um 90° dazu versetzt angeordnet sind.

6. Aufhängeöse nach Anspruch 5, dadurch gekennzeichnet, daß die beiden Ringkörper (5, 6) im miteinander verbundenen Bereich verstärkt ausgebildet sind.

7. Aufhängeöse nach Anspruch 1, dadurch gekennzeichnet, daß die Freiräume (7) sichelförmige Gestalt aufweisen und einer der Ringkörper (5 bzw. 6) etwa kreisförmig und der andere Ringkörper (6 bzw. 5) etwa elliptischen Umriß aufweist.

8. Aufhängeöse nach einem oder mehreren der Ansprüche 1 bis 7, dadurch gekennzeichnet, daß im Mittelbereich des inneren Ringkörpers (5) zwischen den Aufhängepunkten (3, 4) Pufferkörper (9, 10) angeordnet, die bei Einfederbewegungen als Anschlag dienen.

9. Aufhängeöse nach Anspruch 8, dadurch gekennzeichnet, daß die Pufferkörper (9, 10) eine größere Breite als die Ringkörper (5, 6) aufweisen.

10. Aufhängeöse nach Anspruch 8 und 9, dadurch gekennzeichnet, daß zwischen den Pufferkörpern (9, 10) ein Spalt (11) mit sich beidendig vergrößernden Ausnehmungen (12, 13) vorgesehen ist.

## Claims

1. A suspension shackle (1) for the exhaust system of a motor vehicle, the exhaust system having two suspension points (3, 4), each suspension point being elastically deformable, comprising a loop element (2) made of elastomeric material, into which a self-contained, resilient insert in the shape of a multilayered noose element (8) made of elastically stretchable material is embedded, **characterized in that** the noose element (8) is wound of a cord (16), that the loop element (2) has an inner ring (5) extending over suspension points (3, 4) and an outer ring (6) arranged at a comparatively larger radius about the suspension points (3, 4), rings (5, 6) being spaced apart with respect to each other along part of the circumference and having a space (7) therebetween, and where noose element (8) is arranged in the outer ring (6).

2. The suspension shackle of claim 1, **characterized in that** the cord (16) is made of two single threads (17, 18).

3. The suspension shackle of claim 1, **characterized in that** the cord (16) has a generally straight center thread (19), around which one or more of threads (20) are wound.

4. The suspension shackle of claim 3, **characterized in that** the center thread (19) is made of elastomeric material, and where threads (20) provide the strength of the cord.

5. The suspension shackle of claim 1, **characterized in that** the two rings (5, 6) are connected to each other in the region radially joining suspension points (3, 4), while the spaces (7) are arranged at an angle of approximately 90° in relation to the rings.

6. The suspension shackle of claim 5, **characterized in that** the two rings (5, 6) are reinforced where they join each other.

7. The suspension shackle of claim 1, **characterized in that** spaces (7) are sickle-shaped, and that one of rings (5 or 6) has a generally circular shape, while the other ring (6 or 5) has a generally elliptical shape.

8. The suspension shackle of one or more of claims 1 to 7, **characterized in that** buffer elements (9, 10) are arranged in the center of the inner ring (5) between suspension points (3, 4), where the buffer elements (9, 10) act as stops when suspension shackle (12) is compressed.

9. The suspension shackle of claim 8, **characterized in that** the buffer elements (9, 10) have a width greater than the width of rings (5, 6).

10. The suspension shackle of claim 8 or 9, **characterized in that** a gap (11) is located between buffer elements (9, 10), the gap (11) having recesses (12, 13) formed at its ends.

## Revendications

1. Oeillet de suspension (1) déformable élastiquement, présentant deux points de suspension (3, 4), pour le système des gaz d'échappement d'un véhicule automobile, comportant un corps en boucle (2) fait dans une matière élastomère, dans lequel est enrobée une armature, souple à la manière d'un ressort, fermée en soi, sous la forme d'un corps à lacets (8) à plusieurs couches, fait d'un matériau élastiquement extensible, caractérisé en ce que le corps à lacets (8) est fait d'une corde (16) enroulée, en ce que le corps en boucle (2) comporte un corps annulaire (5) intérieur, s'étendant autour des points de suspension (3, 4) et un corps annulaire (6) extérieur, placé sur un rayon relativement grand autour des points de suspension (3, 4), en ce que les deux corps annulaires (5, 6) sont disposés espacés sur une partie de la circonférence et laissent un espace libre (7), et en ce que le corps à lacets (8) est placé dans lé corps annulaire (69) extérieur.

2. Oeillet de suspension selon la revendication 1, caractérisé en ce que la corde (16) est faite de deux fils (17, 18) torsadés entre eux.

3. Oeillet de suspension selon la revendication 1, caractérisé en ce que la corde (16) comporte un fil central (19) largement étiré, autour duquel sont enlacés ou enroulés un ou plusieurs fils (20).

4. Oeillet de suspension selon la revendication 3, caractérisé en ce que le fil central (19) est fait d'une matière élastomère, et en ce que les fils (20) enlacés autour servent de support de résistance.

5. Oeillet de suspension selon la revendication 1, caractérisé en ce que les deux corps annulaires (5, 6) sont reliés entre eux dans la zone faisant suite radialement vers l'extérieur aux points de suspension (3, 4), tandis que les espaces libres (7) sont décalés d'environ 90° par rapport à ceux-ci.

6. Oeillet de suspension selon la revendication 5, caractérisé en ce que les deux corps annulaires (5, 6) sont renforcés dans la zone de leur assemblage réciproque.

7. Oeillet de suspension selon la revendication 1, caractérisé en ce que les espaces libres (7) ont la forme d'un croissant et l'un des corps annulaires (5 ou 6) présente un contour circulaire et l'autre corps annulaire (6 ou 5), un contour à peu près elliptique.

8. Oeillet de suspension selon une ou plusieurs des revendications 1 à 7, caractérisé en ce que dans la zone centrale du corps annulaire intérieur (5) sont prévus, entre les points de suspension (3, 4), des corps tampons (9, 10), qui servent de butée aux mouvements de ressort.

9. Oeillet de suspension selon la revendication 8, caractérisé en ce que les corps tampons (9, 10) ont une plus grande largeur que les corps annulaires (5, 6).

10. Oeillet de suspension selon les revendications 8 et 9, caractérisé en ce qu'entre les corps tampons (9, 10) il est prévu une fente (11) avec des évidements (12, 13) s'agrandissant aux deux extrémités.
